# EUROPEAN PATENT APPLICATION

(11) **EP 4 779 523 A1**
(43) Date of publication of application: **22.07.2026**
(21) Application number: 25777608.8
(22) Date of filing: 27.03.2025
(51) Int. Cl.: G06N 3/0495, G06N 3/063

(54) **TENSOR PROCESSING METHOD AND APPARATUS THEREFOR**

(30) Priority: 29.03.2024 KR 20240043579
(71) Applicant: Furiosaai Inc., Seoul 06036 (KR)
(72) Inventor: KIM, Han Joon, Hwaseong-si, Gyeonggi-do 18437 (KR); PARK, Jun Young, Goyang-si, Gyeonggi-do 10394 (KR); BAE, Byeong Wook, Seongnam-si, Gyeonggi-do 13490 (KR); BAEK, Joon Ho, Suwon-si, Gyeonggi-do 16514 (KR); JEONG, Hyun Min, Seoul 07931 (KR); CHOI, Young Geun, Seoul 03473 (KR)
(74) Representative: Jung, Minkyu
(86) International application number: PCT/KR2025/003952
(87) International publication number: WO 2025/206771

(57) **Abstract**

An apparatus for performing data processing according to one embodiment of the present specification comprises: a plurality of processing elements (PEs) configured to perform tensor-based processing; and a semiconductor substrate on which the plurality of PEs are mounted, wherein each PE comprises: a plurality of slice circuits each having a compute pipeline; and a control circuit for controlling the plurality of slice circuits. Each compute pipeline on each slice circuit comprises: i) a fetch unit for fetching at least a part of tensor data; ii) an operation unit for performing an operation on at least a portion of the fetched tensor data, and iii) a commit unit for transmitting an operation result outputted from the operation unit to a destination, wherein the control circuit can control mapping between partitions of the tensor data and the plurality of compute pipelines on the plurality of slice circuits.

## Description

### TECHNICAL FIELD

The present specification relates to tensor processing, and more particularly to a method for processing operations on N-dimensional (N≥0) tensor(s) and an apparatus for performing the same.

### BACKGROUND ART

A tensor is a multi-dimensional array that generalizes vectors and matrices. In addition to a scalar (an N=0 dimensional tensor), a vector (an N=1 dimensional tensor), and a matrix (an N=2 dimensional tensor), a tensor may represent a more generalized form of a higher-dimensional array (an N>3 dimensional tensor).

The rank of a tensor represents the number N of dimensions/axes/channels of the tensor. For example, a scalar may be represented by rank 0, a vector by rank 1, and a matrix by rank 2.

The shape of a tensor is a tuple structure representing the size of each dimension. For example, the shape of an X by Y matrix may be simply expressed as (X, Y). Also, an image having X*Y pixels with three channels RGB (Red, Green, Blue) may be represented as a 3D tensor (X, Y, 3).

Recently, tensors are frequently used in artificial intelligence (AI) frameworks, and such AI frameworks provide various functions and operations for generating/processing tensors.

### DISCLOSURE

### TECHNICAL PROBLEM

A technical problem to be solved by the present invention is to provide a method for performing tensor processing more efficiently and an apparatus therefor.

Other technical problems may be derived from embodiments of the detailed description.

### TECHNICAL SOLUTION

In an aspect of the present invention for solving the above-described technical problem, an apparatus for performing data processing may include: a plurality of processing elements (PEs) configured to perform tensor-based processing; and a semiconductor substrate on which the plurality of PEs are mounted.

Each PE may include: a plurality of slice circuits each having a compute pipeline; and a control circuit configured to control the plurality of slice circuits.

Each compute pipeline on each slice circuit may include: i) a fetch unit configured to fetch at least a part of tensor data; ii) an operation unit configured to perform an operation on at least a part of the fetched tensor data; and iii) a commit unit configured to deliver an operation result output from the operation unit to a destination.

The control circuit may control mapping between partitions of the tensor data and the plurality of compute pipelines on the plurality of slice circuits.

Preferably, the plurality of slice circuits may be configured/reconfigured based on a shape of the tensor data and an instruction given for the tensor data.

Preferably, each of the plurality of slice circuits may be assigned a control register that stores configuration/reconfiguration information of each slice circuit.

Preferably, the control circuit may perform configuration/reconfiguration of each slice circuit and read/write of an associated control register.

Preferably, each PE may further include a scratch pad memory (SPM). Data of the plurality of control registers assigned to the plurality of slice circuits may be configured by loading values stored in the scratch pad memory.

Preferably, partitioning of the tensor data may be performed based on at least one of the shape of the tensor data and the instruction given for the tensor data.

Preferably, a data memory having a bandwidth related to a compute pipeline may be assigned for each slice circuit.

Preferably, the operation unit may include at least one of: a contraction engine configured to perform tensor contraction on at least a part of the fetched tensor data; a vector engine configured to perform an operation on a vector that is a one-dimensional tensor; and a transpose engine configured to perform data transposition.

Preferably, the contraction engine may perform the tensor contraction by reducing a rank.

Preferably, the control circuit may configure a configurable fetch network through a connection between different fetch units on different slice circuits.

Preferably, data fetched by the fetch network may be multicast to different operation units of the different slice circuits.

Preferably, the fetch network may perform the multicast by reusing the fetched data.

Preferably, the fetch unit may include a main fetch unit and a sub fetch unit, and the commit unit may include a main commit unit and a sub commit unit.

Preferably, a main data path may be configured based on the main fetch unit and the main commit unit, and a sub data path may be configured based on the sub fetch unit and the sub commit unit, and an operation on the main data path and an operation on the sub data path may be performed simultaneously within one slice circuit.

Preferably, the control circuit may configure/reconfigure a first slice circuit and a second slice circuit, for delivering a first operation result of a first operation unit of the first slice circuit to the second slice circuit.

Preferably, each PE may further include a core processor, and the control circuit may operate as a co-processor for the core processor.

Preferably, the control circuit may include a command processor configured to execute instructions obtained from the core processor. The instructions may include at least one of: an instruction for loading a control register address assigned to each slice circuit; and an instruction for enabling each slice circuit.

Preferably, the apparatus may further include: a memory controller configured to control a data flow between the plurality of PEs and a memory device; and an on-chip network formed on the semiconductor substrate for the plurality of PEs and the memory controller.

Preferably, the tensor data may be related to neural network processing for artificial intelligence.

Preferably, the apparatus may be a tensor contraction processor for acceleration of the neural network processing for artificial intelligence.

In another aspect of the present invention for solving the above-described technical problem, a method for performing data processing may include: obtaining an instruction for tensor data; performing partitioning on the tensor data based on at least one of a shape of the tensor data and the instruction; assigning partitions of the tensor data to a plurality of compute pipelines; and processing each of the partitions of the tensor data through each of the plurality of compute pipelines. Each compute pipeline may include i) a process of fetching each partition of the tensor data, ii) a process of performing an operation on the fetched partition, and iii) a commit process of delivering a result of the operation to a destination.

In another aspect of the present invention for solving the above-described technical problem, a storage medium readable by at least one processor and storing program codes that, when executed by the at least one processor, cause the at least one processor to perform operations, wherein the operations may comprise: obtaining an instruction for tensor data; performing partitioning on the tensor data based on at least one of a shape of the tensor data and the instruction; assigning partitions of the tensor data to a plurality of compute pipelines; and processing each of the partitions of the tensor data through each of the plurality of compute pipelines.

Each compute pipeline may include: i) a process of fetching each partition of the tensor data; ii) a process of performing an operation on the fetched partition; and iii) a commit process of delivering a result of the operation to a destination.

Preferably, the plurality of compute pipelines may be formed on a plurality of slice circuits, and the plurality of slice circuits may be configured/reconfigured based on the shape of the tensor data and the instruction given for the tensor data.

Preferably, each of the plurality of slice circuits may be assigned a control register that stores configuration/reconfiguration information of each slice circuit.

Preferably, the operations performed by the at least one processor may further include performing configuration/reconfiguration of each slice circuit and read/write of an associated control register.

Preferably, the operations performed by the at least one processor may further include determining partitioning of the tensor data based on at least one of the shape of the tensor data and the instruction given for the tensor data.

Preferably, the operations performed by the at least one processor may further include assigning, for each compute pipeline, a data memory having a related bandwidth.

Preferably, the process of performing the operation may include at least one of: performing tensor contraction on at least a part of the fetched tensor data; performing an operation on a vector that is a one-dimensional tensor; and performing data transposition.

Preferably, the at least one processor may perform the tensor contraction by reducing a rank.

Preferably, the tensor data may be related to neural network processing for artificial intelligence.

Preferably, the at least one processor may be a tensor contraction processor for acceleration of the neural network processing for artificial intelligence.

### ADVANTAGEOUS EFFECTS

According to an embodiment of the present invention, tensor processing can be performed more efficiently.

Various other technical effects may be derived from the embodiments of the detailed description.

### BRIEF DESCRIPTION OF DRAWINGS

FIG. 1 illustrates a typical array processor and a vector processor.
FIG. 2 is a diagram for explaining a tensor contraction approach that performs matrix multiplication operations according to a fixed size.
FIG. 3 illustrates an apparatus (1) for data processing according to an embodiment.
FIG. 4 illustrates a PE (10) according to an embodiment.
FIG. 5 illustrates a more specific example of a structure of the PE (10).
FIG. 6 is a diagram for explaining partitioning and assignment of tensor data according to an embodiment.
FIGS. 7 to 9 illustrate various examples in which a three-dimensional tensor is partitioned and assigned to four slices.
FIG. 10 is a diagram for explaining an example of an overall operation of a TU (100) and a configuration of an operation unit (175).
FIG. 11 illustrates a specific implementation example of a configuration of a slice (160) according to an embodiment.
FIG. 12 illustrates a detailed example of a structure of a contraction engine (176).
FIG. 13 illustrates a detailed example of a structure of a vector engine (177).
FIG. 14 is an example for explaining a fetch network according to an embodiment.
FIGS. 15 to 17 are diagrams for explaining examples of processing on input tensor data according to various embodiments.
FIG. 18 illustrates examples of data reuse and dot products in the TCP (1).
FIG. 19 illustrates a flow of a method performed in an apparatus for data processing according to an embodiment.
FIG. 20 illustrates a case in which a plurality of fetch units and a plurality of commit units are configured in one slice according to an embodiment.

### DETAILED DESCRIPTION

The examples described below are non-limiting embodiments provided to facilitate understanding of the invention described above, and those skilled in the art will appreciate that combinations, omissions, and modifications of some embodiments are possible.

First, as one example to which the tensor processing proposed in this specification may be applied, an artificial neural network and processing thereof will be briefly described.

Neurons constituting the human brain form a kind of signal circuit, and a data processing structure and method that imitates the signal circuit of neurons is referred to as an artificial neural network (ANN). In an ANN, a plurality of neurons connected to each other form a network, and the input/output process for an individual neuron may be mathematically expressed as [Output = f(W1×Input1 + W2×Input2 + ... + WN×InputN)]. Here, Wi denotes a weight, and the weights may have various values depending on the type/model of the ANN, a layer, each neuron, learning results, and the like. As computing technology has recently advanced to enable processing of deep neural networks (DNNs) having a plurality of hidden layers, training/learning and inference for AI have become more sophisticated and advanced. The training process in a DNN is referred to as deep learning and may include, for example, weight adjustment. Inference refers to a process of obtaining an output by inputting new data to a trained model. A convolutional neural network (CNN) is one representative DNN and may be configured based on a convolutional layer, a pooling layer, a fully connected layer, and/or a combination thereof. A CNN has a structure advantageous for learning two-dimensional data and is known to exhibit excellent performance, for example, in image classification and detection. In addition to CNNs, various DNNs-for example, a recurrent neural network (RNN) having excellent performance in processing data having time-series characteristics such as language, a long short term memory (LSTM) that imitates forgetting of old data, a generative adversarial network (GAN) that generates fake data through competition with learning data, and a large language model (LLM) that can infer from a user input to generate various words-have been actively researched and applied in various fields. Hereinafter, various types of AI-related neural networks including the above-described DNNs are collectively and simply referred to as a neural network (NN).

Neural network processing may be performed by various devices. Although neural network processing is not impossible using a general-purpose CPU, a general-purpose CPU has limitations in effectively handling the massive parallel processing involved in neural network processing, and thus processors having architectures more suitable for neural network processing are used. An AI accelerator generally refers to a processor used for the purpose of accelerating AI operations. For example, while a graphics processing unit (GPU) was initially developed for graphics processing, it has recently been widely used as an AI accelerator for large-scale data processing and for training and inference of complex models due to its excellent parallel processing capability. A neural processing unit (NPU) is a processor developed to perform AI operations more quickly and is specialized for NN/AI operations. Compared to a GPU, an NPU can provide higher efficiency for AI operations by implementing layers of an AI model as physical circuit configurations on a semiconductor chip.

The term processor referred to in this specification may be a concept encompassing independent (stand-alone) or auxiliary (co-processor) AI accelerators configured to perform NN/AI operations more quickly, such as GPUs and/or NPUs. Depending on the implementation, an AI accelerator may be configured in a form optimized for either training or inference, or may be configured for use in both training and inference. Although AI accelerators come in various forms, the major performance requirements are as follows. (i) Parallel processing: Since AI operations require large-scale data processing, parallel processing must be supported for this purpose. That is, tensor operations such as matrix and vector operations must be performed efficiently. (ii) Power efficiency: Power efficiency is important in environments with limited power, such as edge users/terminals, or in environments such as data centers. (iii) Low-latency characteristics: Low latency is required in fields where real-time performance is important, for example, AI-based detection/autonomous driving, where immediate response is required. (iv) Memory performance: Sufficient memory capacity and high memory bandwidth are required to process large-scale models and tensors. (v) In addition, high levels of accuracy and precise floating-point operations, and compatibility supporting various frameworks and libraries may be required.

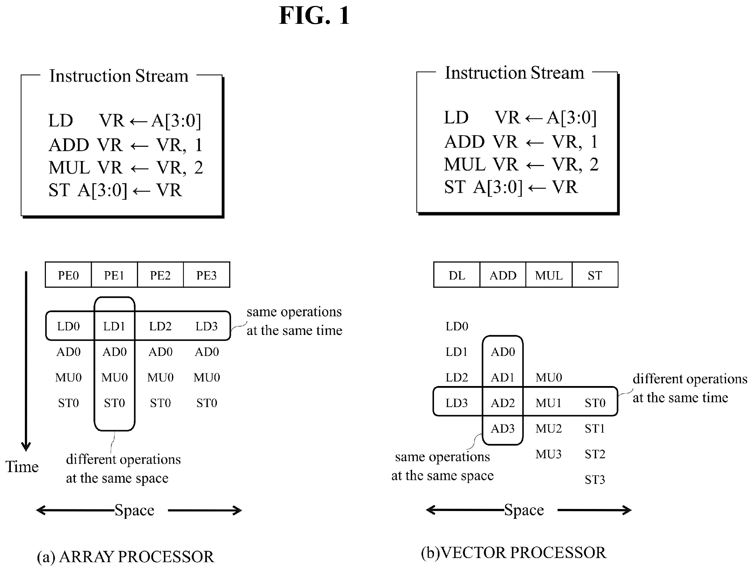

FIG. 1 is a diagram for comparing and describing a general array processor and a vector processor.

An array processor and a vector processor have in common that they effectively support SIMD (Single Instruction, Multiple Data) parallel processing; however, they differ in the detailed mechanisms of parallel processing as follows.
(a) An array processor includes a plurality of processing elements (PEs) to simultaneously perform the same operation in parallel on each of a plurality of elements included in an array.
(b) A vector processor is optimized for processing operations based on vectors, which are one-dimensional arrays, and executes vector instructions through pipeline parallelism instead of using a plurality of PEs. The pipeline is divided depending on the instruction; for example, addition (ADD) and multiplication (MUL) are performed in different pipelines.

A vector processor includes vector registers for loading (LD) and storing (ST) vectors, thereby enabling data to be loaded and stored in vector units. In order to process vectors of different lengths, vector length registers (VLEN) are required. Since elements constituting a vector may be stored apart from each other in memory, a vector stride register (VSTR) is required, and the stride value corresponds to the distance between vector elements.

A vector processor mainly supports mathematical operations, particularly vector and matrix operations, and can efficiently perform linear algebra, matrix multiplication, element-wise operations, inner products, and the like. Such a vector processor is also used for large-scale tensor operations that frequently occur in the AI field, and recently GPUs may include vector processors.

### Tensor Contraction Approach I

Tensor contraction as used in the present specification may mean reducing the dimension of a tensor, and the term "contraction" may be replaced or used interchangeably with "reduction" or other similar expressions.

One of the main operations of machine learning models is tensor contraction, and tensor contraction may be related to summing elements along certain axes of a tensor. Matrix multiplication (e.g., a dot product) is an example of tensor contraction. For example, multiplication between an m by k matrix and a k by n matrix may be understood as contracting a tensor of size (m*k, k*n) into a tensor of size m*n. Such contraction may be performed based on the common k axis between the matrices.

Meanwhile, as a structure for tensor contraction, a processing technique that decomposes/reconstructs a tensor operation into a plurality of matrix multiplications (hereinafter, referred to as "Approach I") may be considered, and for this purpose, the processor may include a matrix multiplication unit that performs matrix multiplication operations of a predetermined/fixed size.

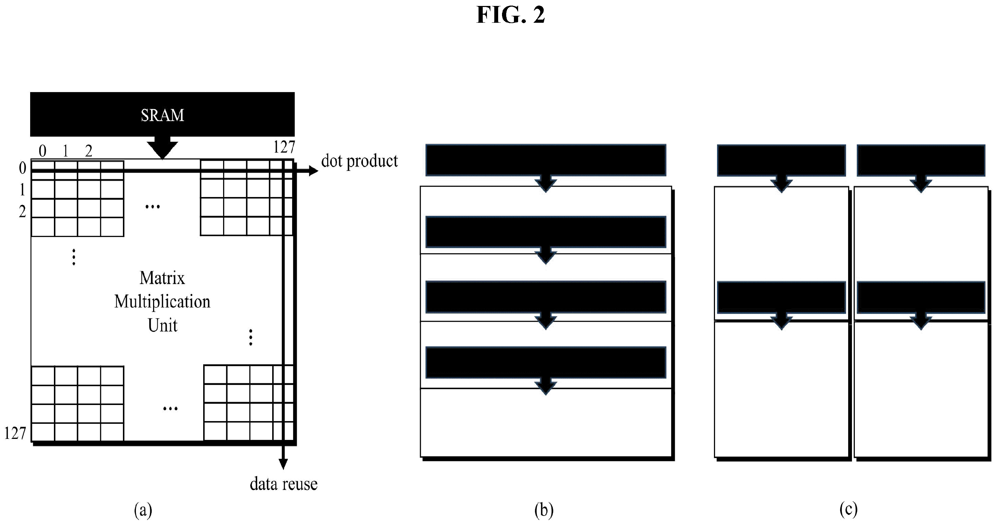

FIG. 2 is an example for explaining a matrix multiplication unit according to Approach I.

Referring first to FIG. 2(a), it is assumed that the matrix multiplication unit is configured as a systolic array and its size is fixed to 128 by 128 processing elements (PEs). In this case, since the matrix multiplication unit can simultaneously perform up to 128 dot product operations, an SRAM should also support 128 dot product operations, that is, the number of data elements delivered at once from the SRAM should be 128, to guarantee the maximum utilization (maximum efficiency). In other words, if the SRAM bandwidth does not support 128 PEs, the maximum utilization (maximum efficiency) cannot be achieved. Although the maximum data reuse rate in the matrix multiplication unit is configured as 128 times which is relatively high, however, in an operation that does not require data reuse up to 128 times, there may exist unused PEs left over, causing waste of processing resources. In such a case of FIG. 2(a), rich parallelism and data locality in tensor operations may not be sufficiently exploited, thereby constraining processing performance.

If the size of the matrix multiplication unit of a processor is fixed to be small, as in FIGs. 2(b) and 2(c), data reuse range is limited, thereby degrading efficiency. In addition, if a large number of small PEs are connected through a network-on-chip (NoC), high complexity is involved in performing tensor operations in parallel. Further, programs for a large number of low-performance cores are more difficult to generate than programs for a relatively small number of high-performance cores.

In tensor data processing such as inference, various tensor shapes appear, and thus it is important to maximize parallelism and data reuse according not only to tensor shapes but also to batch sizes. However, in a chip based on Approach I, it may be difficult to fully utilize a huge matrix multiplication unit across various shapes and types of tensor operations.

### TCP - Novel Tensor Contraction Approach

Hereinafter, a processor employing a new tensor contraction scheme capable of overcoming the drawbacks of Approach I that is based on fixed-size matrix multiplication described above, will be described. The processor described below may be an AI accelerator, but the scope of application is not limited to AI/neural networks, and may also be applied to more general-purpose processors (e.g., CPUs) or other special-purpose processors (e.g., communication modems, signal processors, etc.).

The processor disclosed in the present specification may include a tensor contraction engine, and is referred to as a tensor contraction processor or simply TCP. Unless otherwise stated, the processor proposed in the following description may refer to the TCP.

In the embodiments described below, tensor contraction may be used as a primitive element instead of matrix multiplication. According to such a new approach proposed in the present specification, not only are large-scale parallel tasks enabled, but also pipelining may be performed over a time axis, similar to characteristics of the vector processor described above with reference to FIG. 1(b).

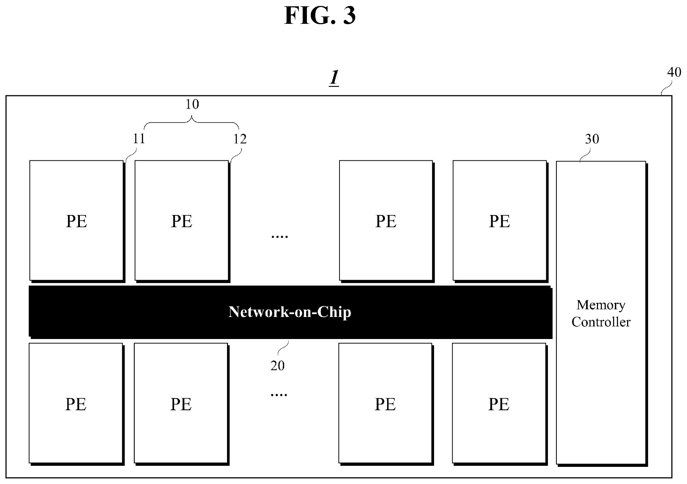

FIG. 3 illustrates an apparatus (1) for data processing according to an embodiment. In FIG. 3, the apparatus (1) for data processing may be the TCP.

The apparatus (1) for data processing may include a plurality of PEs (10), a memory controller (30), an on-chip network (NoC) (20), and a silicon substrate (40).

The memory controller (30) may control a connection between a high-bandwidth memory (HBMx, not shown) and the plurality of PEs (10).

The NoC (20) may provide a network for data exchange among various components (10, 30, etc.) disposed on the silicon substrate (40). The NoC (20) may support data transfer between PEs, and each PE may transfer data to the high-bandwidth memory or to another PE. As an example of data exchange between PEs, since a large language model (LLM) exceeding the memory size of the apparatus (1) requires distributed processing, data exchange (inter-chip communication) between PEs may be required.

Each of the plurality of PEs (10) may be configured to independently/individually perform tensor-related data processing. For example, a first PE (11) may perform tensor contraction independently of a second PE (12). For example, each PE may operate as a device independent from a host. For example, each PE may be driven by a host as an independent device.

Each PE (10) has an independent address space and operates independently. Access to an unauthorized address may be restricted by an address translation unit (not shown). Address translation can dynamically allocate memory space and PE usage at runtime as the PE's address space. This forms the basis of PE-to-PE communication and, combined with PCIe Peer-to-Peer functionality, enables PEs across multiple chips to exchange data using the same abstraction. This may enable scalable compilation and dynamic resource reservation.

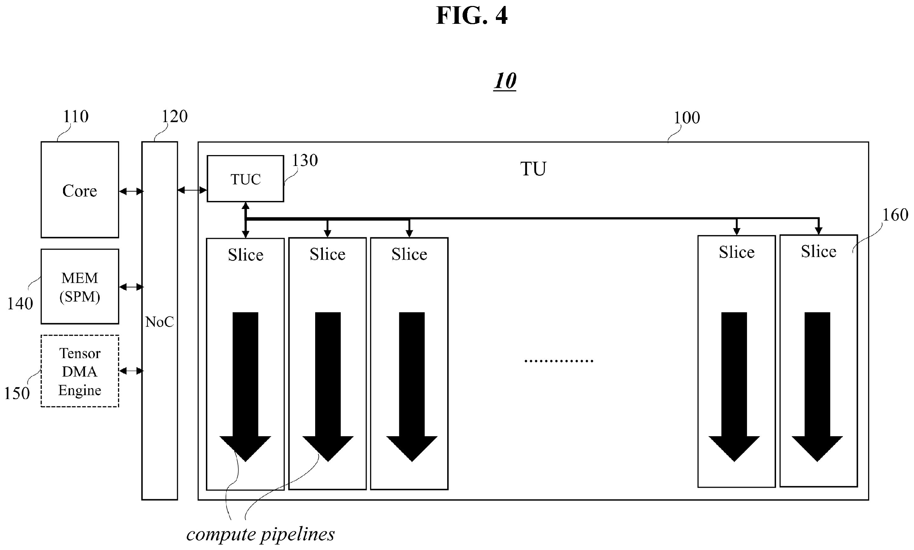

FIG. 4 illustrates a PE (10) according to an embodiment.

Referring to FIG. 4, the PE (10) may include a core processor (110), a tensor unit (TU) (100), a memory (140), and a NoC (120).

The core processor (110) may control the TU (100) as a co-processor. In consideration of latency in accessing the TU (100) from the core processor (110), the TU (100) may operate asynchronously.

The memory (140) may include an SPM (scratch pad memory).

The PE (10) may include a tensor direct memory access(DMA) engine (150). The tensor DMA engine (150) may optimize memory access while an operation is being performed by recognizing the shape of a tensor. The tensor DMA engine (150) may index and transfer a tensor in an arbitrary dimension order.

The core processor (110) may boot with software stored in the memory (140). In response to a request from the host, the core processor (110) may load a program including tensor operations into the memory (140) and execute the program. While executing the program, the core processor (110) may control the TU (100) by reading/writing registers of a tensor unit controller (TUC) (130) of the TU (100).

The TU (100) includes a plurality of slices (160). By slicing/partitioning tensor data into smaller units in this manner, more flexible configuration for various tensor shapes is possible. Depending on configuration, an entire set of slices may operate like one large PE, or each slice may operate as a small, independent parallel compute unit. That is, unlike Approach I that combines one large memory and a large-scale matrix multiplication unit, in the TCP architecture proposed herein, a compute pipeline including each data memory (e.g., SRAM) and operation unit is divided into a plurality of slices (160).

Each slice (160) may be assigned a data memory related to a compute pipeline. Each compute pipeline may include a fetch-operation-commit process.

The TU (100) may include a massive control register set(s) describing tensor shapes and tactics. For example, a control register may be assigned for each slice (160)/each compute pipeline and thus may be individually controlled; however, the control register sets may also be configured identically and controlled identically. For example, a plurality of control register sets may be configured at once through broadcast/multicast.

Depending on the configuration of control registers, one or more connected tensor operations may be performed. Each slice (160) configured through a control register can independently process tensor data (e.g., tensor partitions). The core processor (110) may read/write control registers linked to the compute pipeline of each slice (160) through the Tensor Unit Controller, TUC (130). In the control registers, the indexing structure of fetch-operation-commit for N-dimensional tensors, indexing of internal buffers, types and sequences of operations, topology of slices (160), and the like may be set. A set of control registers configured by software defines spatially/temporally parallelized tensor operations. When an enable register among the control registers is set, tensor/vector operations can be performed based on the set of configured control registers. Each slice (160) configured through a control register can independently process tensor data (e.g., tensor partitions).

The TUC (130) may include a status register that aggregates states of all slices (160). The core processor (110) may check a state of each slice (160) through the status register.

The core processor (110) may execute a program consisting of tensor operations by repeating a series of processes of setting control registers, enabling them, and checking status. Meanwhile, according to an embodiment, instead of the core processor (110) directly writing the control registers, a set of control registers related to tensor operations may be stored in the memory (140) and the TUC (130) may load the entire control register set. That is, the core processor (110) may control the TU (100) efficiently through the TUC (130) instead of directly reading/writing control registers of slices (160) in the TU (100).

The TUC (130) may include a command processor (not shown) configured to sequentially execute commands given from the core processor (110). The command processor may include a command queue. The core processor (110) may push (write) commands into the command queue of the TUC (130). For example, the command may include at least one of the following, without being limited thereto.
- 'dma(addr, id)': a command for transferring a tensor between a memory (a memory connected to the memory controller (30)) and the data memory (165), where an id-based DMA may be used to specify source/destination tensor information (e.g., shape).
- 'load(addr, csr addr, size)': a command for loading control registers of a given size from the memory (140) to a control register address of a slice (160).
- 'exec(id)': an execution command for a tensor contraction operation.
- 'wait _{d/e} (id)': a command for waiting for a DMA or execution command.

Most commands including 'dma' and 'exec' may be executed asynchronously, and data transfer and computation may overlap. When synchronization is needed, 'wait' may be called. An example of a typical command sequence is [dma(., 0)-load()-wait_{d} (0)-exec(0)-dma(.,1)-load()-waitₑ (0)-wait_{d} (1)-exec(1)-...,], in which a tensor is first loaded using DMA at id=0 and control registers are configured (load). After the DMA completes, an id=0 operation may be executed while data for the next iteration is loaded in parallel (dma). The core processor (110) may check a status of the command queue using polling or interrupts.

The core processor (110) can continuously push commands to the command queue of the TUC (130) and ensure that the TU (100) continuously performs tensor operations by keeping the command queue non-empty. Since the command processor sequentially executes commands in the command queue, the core processor (110) is responsible for dynamic control flow.

For example, while a previous tensor operation is in progress in the TU (100), the core processor (110) sends the next command (e.g., a DMA or a command for a new TU operation) to the command queue, after which the core processor (110) continues to execute other commands. Tasks can be performed in parallel. The TU (100) receives a new command from the command queue and starts execution.

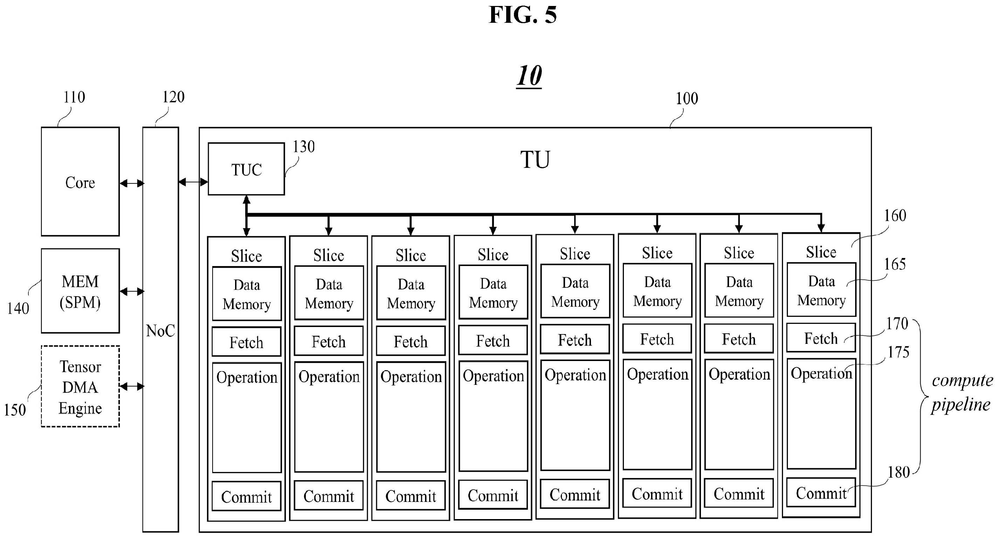

FIG. 5 illustrates a more specific example of a structure of the PE (10).

Referring to FIG. 5, a data memory (165) is assigned for each slice (160), and a compute pipeline of each slice may include at least one of a fetch unit (170), an operation unit (175), and a commit unit (180).

The fetch unit (170) may continuously/sequentially read at least a part of an input tensor partitioned in the data memory (165) and provide it to the operation unit (175) in a required form.

The operation unit (175) may stream and process the fetched data. The operation unit (175) may include at least one of a contraction engine, a vector engine, and a transpose engine.

The commit unit (180) may store an operation result of the operation unit (175) back into the data memory (165).

The data memory (165) may serve as a scratch pad and store tensors. The data memory (165) may be used to fetch an input tensor and commit an output tensor after an operation. The data memory (165) may support virtual addressing through a page table to convert a virtual address into a physical address. Using this, a contiguous large memory space may be dynamically allocated, which may facilitate tensor management.

Meanwhile, although the data memory (165) may have a one-dimensional address space, data stored in the data memory (165) may be an N-dimensional tensor. For example, assuming a three-dimensional tensor having a shape of (X (height)=3, Y (width)=4, Z (channel)=2) as shown in Table 1, addresses of respective tensor elements in memory may vary depending on how the tensor is stored in the data memory (165). For example, Table 2 shows storage according to [X][Y][Z]=[3][4][2] (e.g., X-first, Z-last), and Table 3 shows storage according to [Z][X][Y]=[2][3][4] (e.g., Z-first, Y-last). Conversion between Table 2 and Table 3 corresponds to transposition.

**[Table 1]**

| | *y0* | | *y1* | | *y2* | | *y3* | |
|---|---|---|---|---|---|---|---|---|
| | *z*0 | *z1* | *z0* | *z1* | *z0* | *z1* | *z0* | *z1* |
| *x0* | a | m | d | p | g | s | j | w |
| *x1* | b | n | e | q | h | t | k | x |
| *x2* | c | o | f | r | i | v | l | y |

**[Table 2]**

| | | | | | | | | | | | | | | | |
|---|---|---|---|---|---|---|---|---|---|---|---|---|---|---|---|
| a | m | d | p | g | s | j | w | ...... | o | f | r | i | v | l | y |

**[Table 3]**

| | | | | | | | | | | | | | | | |
|---|---|---|---|---|---|---|---|---|---|---|---|---|---|---|---|
| a | d | g | j | b | e | h | k | ...... | q | t | x | o | r | v | y |

Looking at read/write of the data memory (165), the data memory may be accessed (read, write) in units of a predefined memory width, and may be randomly accessed with respect to depth of the data memory (165). Also, within the same depth, data corresponding to the memory width may be read at once (parallel access). However, only one depth may be read per cycle (sequential access). Considering this, when tensor data is stored in the data memory (165), data corresponding to a last axis in the storage scheme may be read at once by the memory width, and data corresponding to a non-last axis may be read in units of N (where N is an integer not greater than the width) although random access is possible. For example, assuming a memory width of 4 in the example of Table 3, a memory access structure may be expressed as in Table 4.

**[Table 4]**

| | | | |
|---|---|---|---|
| a | d | g | J |
| b | e | h | k |
| c | f | i | l |
| m | p | s | w |
| n | q | t | x |
| o | r | v | y |

In the array [Z][X][Y]=[2][3][4], with respect to the last axis Y, four values [y0=a, y1=d, y2=g, y3=j] corresponding to depth 0 may be read at once, but these depth 0 values all belong to z0. To read values belonging to z1, random access from depth 0 to depth 5 may be performed and four values [y0=o, y1=r, y2=v, y3=y] may be read at once, but these depth 5 values all belong to z1. As in the example of Table 4, for each width read (one cycle), four values y0 to y3 may be read at once for the last axis Y, but only one of z0 or z1 may be read for the first axis Z.

In other words, the fetch unit (170) may access the last dimension (last_dim) of tensor data stored in the data memory (165) in units of the memory width, that is, in bank units (e.g., 8B, 16B, 32B/cycle), and may access non-last dimensions in an arbitrary dimension order.

The commit unit (180) may operate similarly. The commit unit (180) may also perform slicing/reshaping with respect to arbitrary dimensions in the case of non-last dimensions. For slicing, a last dimension may need to be handled by a separate function or by transposition. For transposition, reference is made to the description of the transpose engine below.

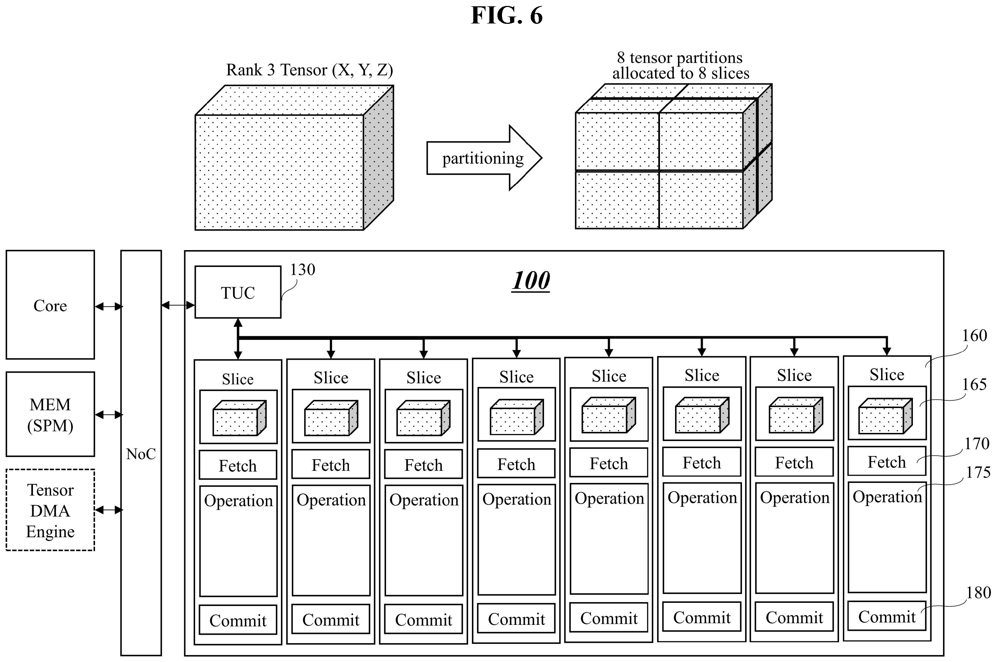

FIG. 6 is a diagram for explaining partitioning and assignment of tensor data according to an embodiment. For convenience of description, it is assumed that an input tensor of the TU (100) is a three-dimensional tensor (X, Y, Z) and that the TU (100) includes a total of eight slices (160).

Referring to FIG. 6, tensor data may be divided into eight data partitions, and each data partition may be assigned to each slice. For example, if a three-dimensional tensor (X, Y, Z) is evenly partitioned by 1/2 along each axis, the data memory (165) of each slice (160) may store a three-dimensional tensor partitioned as [X/2][Y/2][Z/2].

Tensor partitioning methods may vary and are not limited to the above example. For example, an arbitrary axis of a tensor may be divided and assigned. For example, when Z=8, a two-dimensional tensor (X, Y) corresponding to z0 may be assigned to a first slice, a two-dimensional tensor (X, Y) corresponding to z1 may be assigned to a second slice, and a two-dimensional tensor (X, Y) corresponding to z7 may be assigned to an eighth slice.

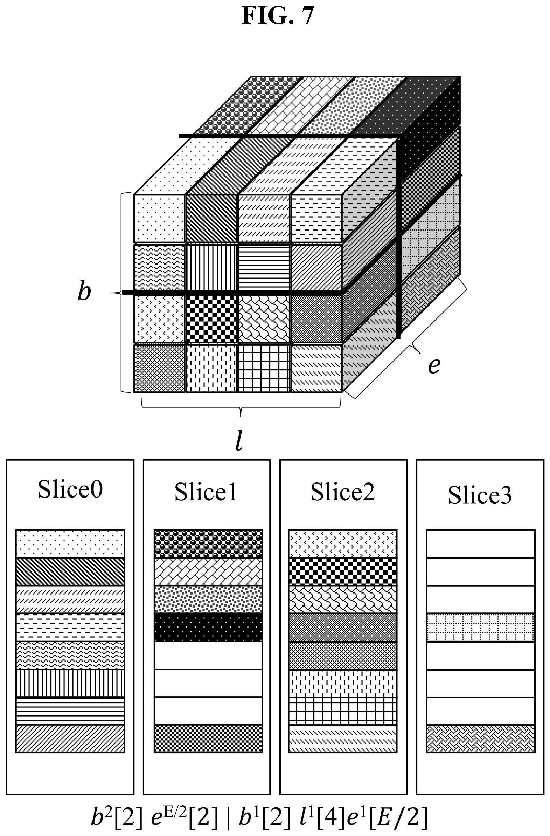

FIGS. 7 to 9 illustrate various examples of partitioning a three-dimensional tensor and assigning it to four slices.

In FIGS. 7 to 9, for convenience of description, a feed-forward layer is considered. It is assumed that a dimension of an input tensor of the feed-forward layer is b*1*e (e.g., b=4, 1=4, e=E) and that a dimension of a weight is e*f. Here, b denotes a batch size, l denotes a sequence size, e denotes an embedding size of input, and f denotes an embedding size of a feed-forward network. Contraction along the e axis is represented as "ble,ef → blf". The notation "inter-slice partitioning shape | intra-slice shape" is used.

Referring to FIG. 7, a total of 4 partitions are generated as a result of 1/2 partitioning on the b axis and 1/2 partitioning on the e axis, and one partition is allocated to each slice. Specifically, since the partitioning along the b axis has a step size or stride of 2, it can be expressed as b². Since partitioning is performed across two slices, it may be expressed as [2]. This applies equally to the e axis. Therefore, the e axis has a stride of E/2 on 2 slices and can be expressed as e^{E/2}[2]. As a result, an inter-slice partitioning shape is b²[2]e^{E/2}[2]. Each slice is assigned a shape of [2][4][E/2], which corresponds to 1/4 of the tensor with the same shape [4][4][E], and each axis has a stride of 1. Consequently, the intra-slice shape is b¹[2]l¹[4]e¹[E/2]. Meanwhile, partitions without shading/pattern markings in slice 1 and slice 3 correspond to back-side regions hidden due to the viewpoint of the three-dimensional tensor shown in FIG. 7.

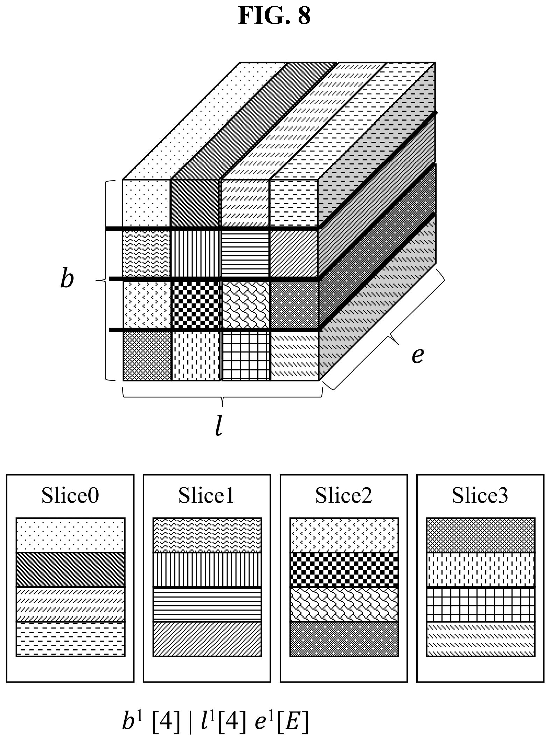

In FIG. 8, an inter-slice partitioning shape is b¹[4], and an intra-slice shape is l¹[4] e¹[E].

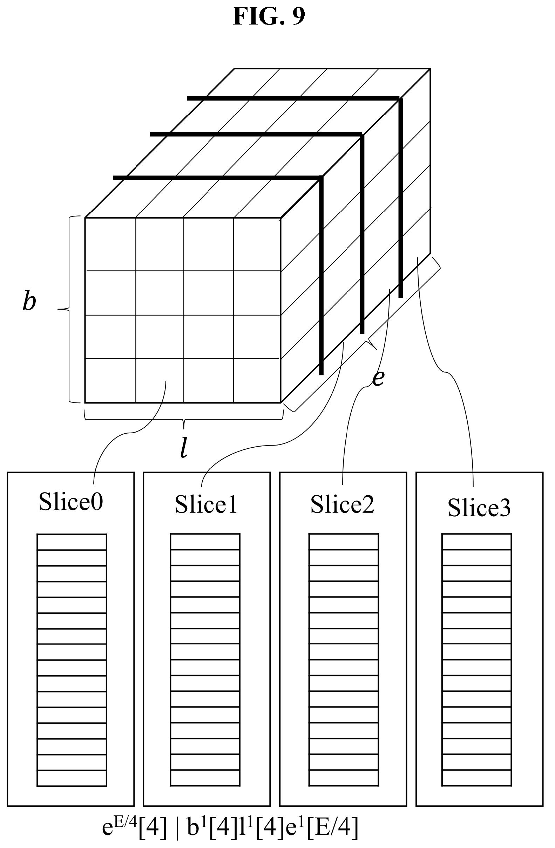

Referring to FIG. 9, a total of 4 partitions are generated as a result of 1/4 partitioning on the e axis, and one partition is allocated to each slice. In FIG. 9, 4 partitions are allocated in order along the e axis from slice 0 to slice 3. In FIG. 9, the pattern/shading representation showing the mapping between the 3D tensor and slices is omitted. In FIG. 9, an inter-slice partitioning shape is e^{E/4}[4], and an intra-slice shape is b¹[4]l¹[4]e¹[E/4].

As shown in FIGS. 7 to 9, through tensor partitioning, a shape of a tensor is lowered, and tensor partitions having the lowered shape may be assigned to respective slices.

In the above, a case where a tensor is divided into equal sizes and stored in the data memory of each slice by dividing some of the axes of the tensor has been exemplified, but the present invention is not limited thereto. Also, although the above examples illustrate that an input tensor is a three-dimensional tensor for convenience of description, a tensor having three or more dimensions may be input.

Meanwhile, in a contraction operation, an order of computing axes is referred to as a tactic. For example, assume that the lowered shape as in FIG. 9 is used for the contraction ble,ef → blf of input tensors. It is assumed that a first input tensor is lowered as e^{E/s}[s] | b¹[B]l¹[L]e¹[E/s], a second input tensor is lowered as e^{E/s}[s] | f¹[F]e¹[E/s], where B, L, E, F denote sizes of respective dimensions (b, 1, e, f) of input/weight tensors before lowering, and s denotes the number of slices (e.g., s=4 in FIG. 9). It is also assumed that an output tensor is lowered as f^{F/s}[s] | b¹[B]l¹[L]f¹[F/s]. One possible tactic is e^{E/s}[s] | b¹[B]l¹[L] f¹[F]e¹[E/s].

In the tactic, e^{E/s}[s] represents an outermost loop on the e axis having a stride of E/s across s slices, which means that s outermost sub-loops are performed in parallel.

In the tactic, b¹[B]l¹[L] f¹[F]e¹[E/s] (i.e., a slice tactic) represents how each slice processes the remaining loops. Here, there are four loops on the b, 1, f, and e (innermost) axes. In the slice tactic, e¹[E/s] is the innermost loop and represents contraction. In the innermost loop, each slice performs contraction. For example, each slice performs a dot product between two vectors of size E/s along the e axis. In the slice tactic, f¹[F] corresponds to the f axis and means that fetched data before the f-axis loop is reused F times (e.g., reused using an internal input buffer of a slice). The f-axis loop is repeated B*L times over the two outermost loops.

In the tactic, e^{E/s}[s] means that partial dot products on the e axis output by each of the s outermost sub-loops should be combined to derive a final result. A process of computing a final dot product from partial dot product values may be performed through a network between slices, and may also be distributed according to a shape of an output tensor.

For a particular pair of input tensors and a tensor operation, there may be various tactics depending on lowered shapes of input/output tensors, the number of available slices, and the like. When compute units are determined, candidate lowered shapes are searched and a candidate satisfying requirements of performance and power consumption is selected. If lowered shapes between neighboring operations do not match (e.g., if a lowered shape of an output of a preceding layer does not match a lowered shape of an input of a subsequent layer), an additional bridge operation for converting the lowered shape may be performed.

The proposed TCP supports dynamic tensor shapes through control registers that describe tensor shapes, as described below. For example, in the example of FIG. 9, the b and l axes may be dynamically determined (e.g., depending on a token generation length of each request and the number of new requests dynamically determined in an LLM service).

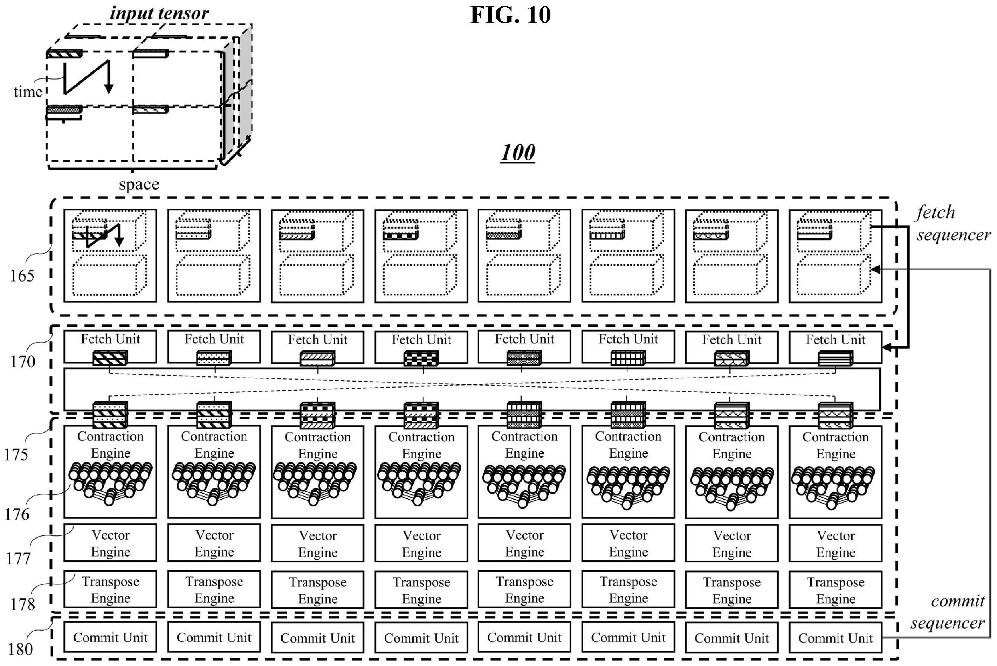

FIG. 10 is a diagram for explaining an overall operation of the TU (100) and an example of a configuration of the operation unit (175).

Referring to FIG. 10, the operation unit (175) may include at least one of a contraction engine (176), a vector engine (177), and a transpose engine (178).

The contraction engine (176) is for contraction of (partitioned) tensor data.

In the TCP (1), tensor operations are provided as primitives, and the TU (100) accelerates operations continuously until a given tensor operation completes according to a length of the tensor operation based on settings for the given tensor operation. For example, the TU (100) not only processes tensors spatially in parallel but also performs continuous processing over the time axis. For this, a Fetch-Operation-Commit pipeline process is used, and the pipeline continuously fetches a given tensor and delivers it to the operation unit, and after completing given processing, sequentially writes a resulting tensor into the data memory.

For example, as in FIG. 10, when an input tensor is partitioned and stored in data memories (165) of eight slices, each fetch unit (170) of each slice may sequentially fetch data from the data memory (165) based on tensor information (e.g., tensor shape/dimension information) obtained through control registers.

As described below, fetch units (170) may configure a fetch network, and data fetched through the fetch network may be multicast to a plurality of operation units (175) (e.g., sequential multicast or at least partially simultaneous parallel multicast).

Each operation unit (175) performs tensor contraction, vector operations, and/or tensor manipulation (e.g., transposition).

The commit unit (180) may sequentially commit a tensor that is an operation result of each operation unit (175) to the data memory (165) based on order information set in control registers.

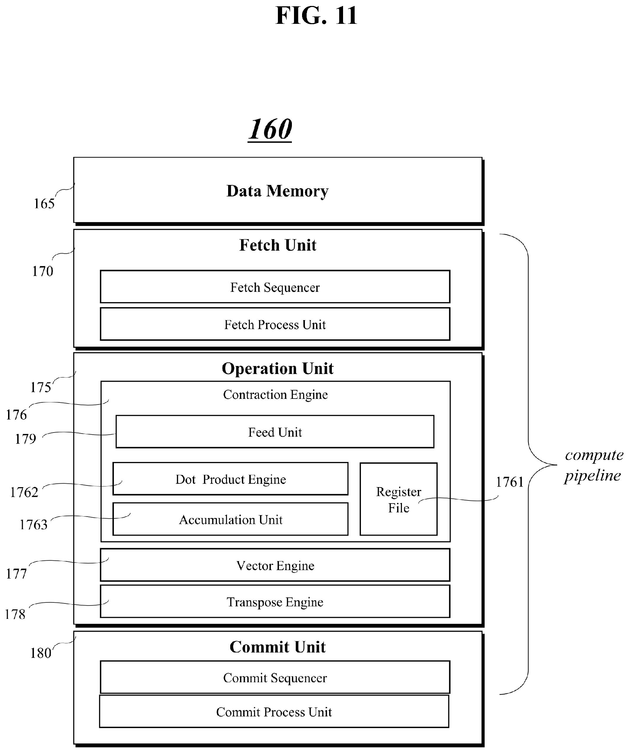

FIG. 11 illustrates a detailed implementation example of a configuration of a slice (160) according to an embodiment.

Referring to FIG. 11, the fetch unit (170) may include at least one of a fetch sequencer and a fetch process unit.

The fetch sequencer may generate an address sequence for accessing the data memory (165). The fetch process unit may perform data preparation such as type conversion and padding.

The fetch unit (170) may configure a fetch network to transmit data not only to its own slice but also to operation units of other slices.

The fetch sequencer generates addresses according to a given tensor shape and a designated order. The fetch sequencer and the fetch process unit not only generate basic N-dimensional loop-style addresses but also support indirect addresses and table lookups, thereby providing flexibility for various types of tensor operations.

Data fetched from the data memory (165) of a slice (160) may be sequentially delivered, through the fetch network, to an operation unit (175) including the contraction engine (176), the vector engine (177), and/or the transpose engine (178).

The contraction engine (176) may include dot product engines (DPEs) (1762) that perform element-wise multiplication and can generate various numbers of outputs using a reduction tree. A depth of each reduction tree is configurable, and outputs of the reduction tree may be temporally accumulated through an accumulation unit (1763). Each DPE (1762) may receive two input vectors, for example, one from a register file (1761) of the contraction engine (176) and the other from a vector sequentially delivered from the fetch unit (170).

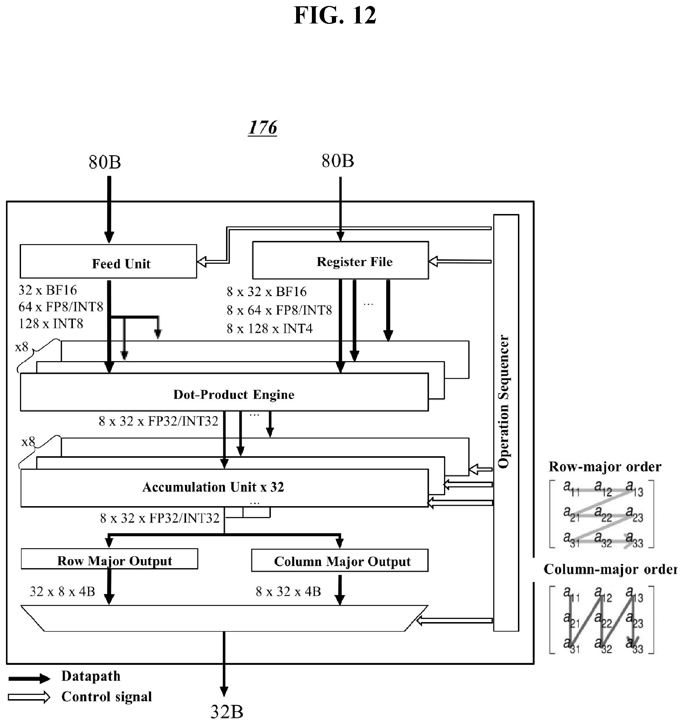

FIG. 12 illustrates a detailed example of a structure of the contraction engine (176). The contraction engine (176) may perform tensor contraction through dot product operations.

Referring to FIG. 12, a data path in the contraction engine (176) includes a feed unit, a register file, dot product engines (DPEs), and an accumulation unit, and may be controlled by an operation sequencer.

For example, the contraction engine (176) may include eight DPEs that perform dot products by spatially summing element-wise multiplication results of two input vectors through a reduction tree. Each DPE may obtain two input vectors from the feed unit and the register file. For example, each input may hold 32 BF16 values, 64 FP8 values, 64 INT8 values, or 128 INT4 values. The number of input elements indicates a maximum throughput of a specified input type.

The eight DPEs may share an input from the feed unit (e.g., data reuse through broadcast), and may receive separate inputs from the register file. The depth of the reduction tree may be set through control registers, which determines the number of outputs of a DPE. Also, a DPE supports max-reduction in addition to add-reduction, thereby supporting various computations such as max-pooling.

The feed unit processes packets delivered through the fetch network and broadcasts data to multiple DPEs to reuse fetched data. The feed unit is controlled by the operation sequencer and enables additional data reuse by providing the same data multiple times to the eight DPEs in consecutive cycles. The feed unit may also use shifts for data reuse in operations such as convolution and transpose tensors.

The accumulation unit receives outputs of the DPEs for temporal accumulation. To temporally reuse the input of the feed unit, multiple accumulators are required to maintain various partial sums. Since increasing the number of accumulators increases read/write costs proportionally, it is preferable to allocate and utilize as few accumulators as possible per unit.

For example, the accumulation unit may include a total of 1024 accumulators, which may be indexed differently depending on the output size of the DPE. For example, when 32 BF16 inputs (from the feed unit) are used and the depth of the reduction tree is 0, each DPE produces 32 multiplication results, so the total number of outputs of the eight DPEs is 256 (=8×32). Considering that 1024 accumulators are available, each output of the DPEs may be associated with up to four accumulators for temporal accumulation. However, when the depth of the reduction tree is 3, each DPE produces four outputs (i.e., partial sums) and the eight DPEs produce 32 outputs. In this case, each output of the DPEs may be associated with 32 (=1024/32) accumulators for temporal accumulation.

The register file serves as storage for operands reused in multiplication and accumulation(MAC) operations. Since the register file provides data to each DPE, it may require at least as many banks as the number of DPEs.

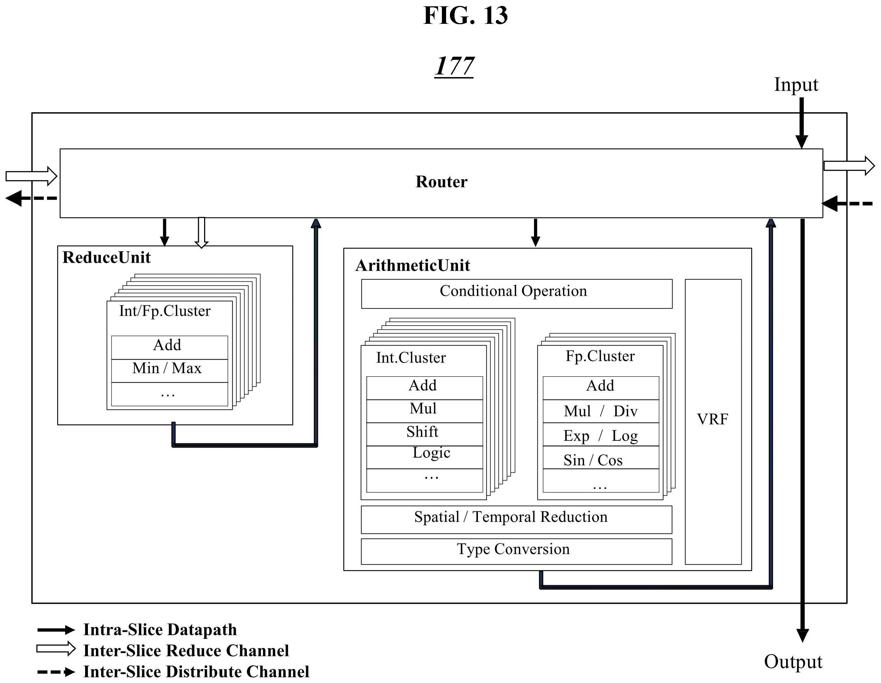

FIG. 13 illustrates a detailed example of a structure of the vector engine (177).

The vector engine (177) may perform non-linear functions, element-wise operations, reduction, and/or type conversion.

The vector engine (177) may include a plurality of clustered functional units. For example, functional units may be for various arithmetic and logical operations on INT32/FP32, functions such as exp or sin, predicated operations, type conversions and/or quantization for INT4/8/16/32, FP8, FP16/BF16, and FP32. The vector engine may also route a reduction result within a slice or between slices to one designated slice or multicast it to multiple slices.

Returning to FIG. 11, the transpose engine (178) can push data for a specified number of rows and pop data for another set of rows to change the last axis of a tensor to a different axis within the slice. The transpose engine (178) may also perform a switch between the last axis and another axis using a fetch sequencer and/or a commit sequencer.

The transpose engine (178) and the commit unit (180), together with the vector engine, may perform tensor manipulation across multiple slices or within a single slice. Tensor manipulation may include transpose, split, slice, concat, and/or reshape. Similar to the vector engine (177), such tensor manipulation may be performed after a dot product operation or in parallel with the dot product operation.

The commit unit (180) may include at least one of a commit sequencer and a commit process unit. The commit sequencer may determine a storage layout of a tensor by designating addresses of sequentially transmitted commit data. The commit process unit may support type conversion and may remove padding from data for compaction during storage.

The fetch unit (170) and the commit unit (180) may each be provided in plural within one slice (160), and may have respective data paths (datapaths). Through a plurality of data paths configured within one slice, a plurality of independent operations may be performed concurrently within one slice (160).

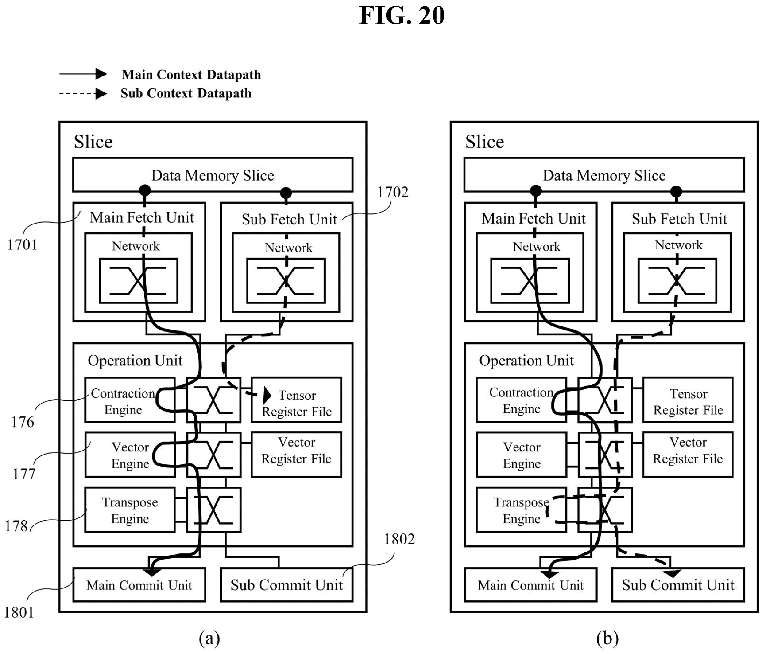

FIG. 20 illustrates a case where a plurality of fetch units and a plurality of commit units are configured within one slice according to an embodiment. In FIG. 20, for convenience of description, a case where the number of fetch units per slice and the number of commit units per slice are each two is exemplified, but the present invention is not limited thereto, and N fetch units/commit units (N is an integer of 1 or more) may be set in one slice.

When a plurality of fetch units are set, one of the fetch units may operate as a main fetch unit (1701), and the remaining fetch unit(s) may operate as a sub fetch unit (1702).

When a plurality of commit units are set, one of the commit units may operate as a main commit unit (1801), and the remaining commit unit(s) may operate as a sub commit unit (1802).

A plurality of data paths may be configured based on combinations of fetch units and commit units, and based on the plurality of data paths, a plurality of contexts (e.g., two in the case of FIG. 20) may be simultaneously performed in one slice.

However, according to an embodiment, configuring a data path may not involve a fetch unit/commit unit. For example, a data path for moving data between register files may be configured without requiring a fetch unit/commit unit. Considering such cases, more data paths than the number of fetch units/commit units may be configured.

Referring to FIG. 20(a), a main context performs an operation of fetching through the main fetch unit (1701), using the contraction engine (176) and the vector engine (177), and committing through the main commit unit (1801). A sub context performs an operation of fetching through the sub fetch unit (1702) and loading data into a tensor register file.

Referring to FIG. 20(b), an operation is shown in which tensor contraction is performed in the main context using the contraction engine (176) while transposition is performed in the sub context using the transpose engine (178).

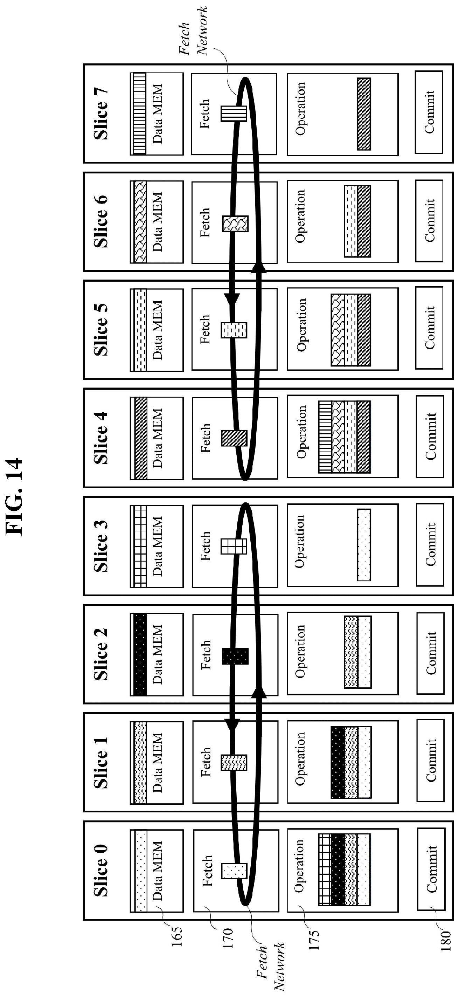

FIG. 14 is an example for explaining a fetch network according to an embodiment.

As described above, fetch units (170) of different slices (160) may configure a fetch network, and data may be continuously fetched in a pipelined manner through the fetch network. Reuse of fetched data may be performed through the fetch network.

Referring to FIG. 14, fetched tensor data may be multicast to multiple slices through the fetch network. Multicast data may be processed in parallel in multiple operation units. The fetch network may be configured/reconfigured similarly to a circuit-switched (CS) network. The fetch network guarantees data order between multiple sources and within packets from a single source and supports multicast. A CS-like fetch network can improve throughput and reduce hardware complexity in routing, ordering, multicast, and flow control.

The TCP (1) may dynamically fuse PEs by reconfiguring the fetch network.

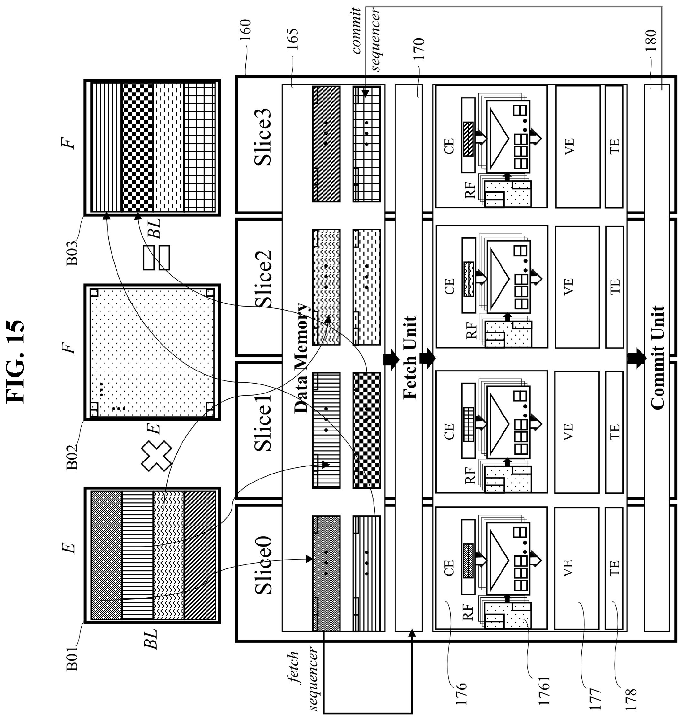

FIGS. 15 to 17 are diagrams for explaining examples of processing input tensor data according to various embodiments.

Depending on how input tensors are allocated/laid out in the data memory (165) and how the fetch unit (170), operation unit (175), and/or commit unit (180) are configured, the parallelism and data locality (or data reuse) used in performing tensor operations may differ. Since the available parallelism and data locality differ depending on the shape of the tensor and the type of required tensor operation, the TCP (1) can operate flexibly by considering the shape of the tensor and the tensor operation.

Referring to FIG. 15, matrix multiplication between two two-dimensional tensors (B01, B02) is performed. The first tensor (B01) is divided into 4 equal parts in the horizontal direction. The second tensor (B02) may be one stored in the register file of the contraction engine. The third tensor (B03) is committed to the data memory (165) as a result of the tensor operation. Each slice can perform operations independently and in parallel. In the example of FIG. 15, it is assumed that data exchange between slices is not performed through a fetch network or vector engine. Each slice sequentially loads partitions of the first tensor (B01) and provides them to the dot product engine of the operation unit, and after each dot product operation, commits to generate an output tensor. In relation to the ble,ef → blf contraction example, in FIG. 15, the tail axis is not the e axis, and the DPE depth becomes 0. Each element of the e axis read from the register file is broadcast, multiplied, and accumulated in the accumulation unit. The partition axis of each slice is b or l, processed in parallel, and the second operand is multicast to all slices and loaded into the register file.

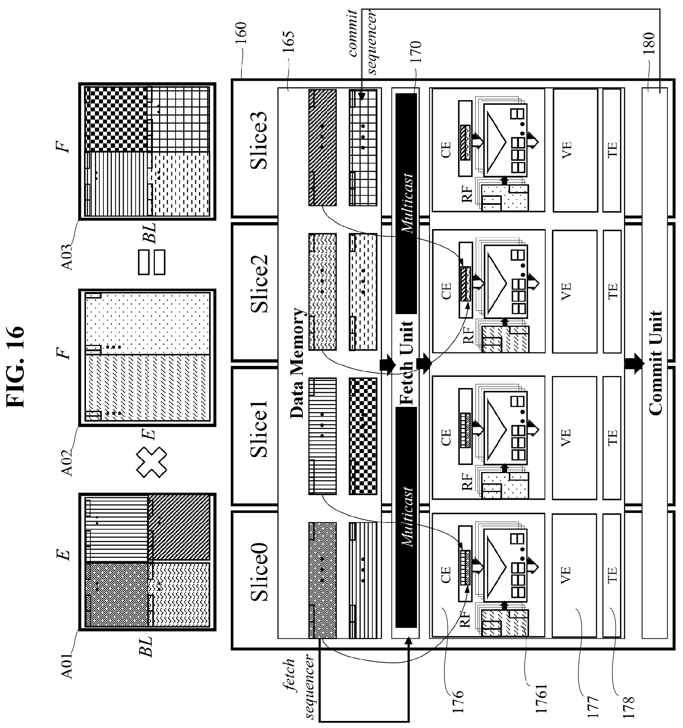

Referring to FIG. 16, matrix multiplication between two two-dimensional tensors (A01, A02) is performed. The first tensor (A01) is divided into 2 equal parts in both horizontal and vertical directions. The second tensor (A02) is stored in the register file of the contraction engine and may be divided and stored in each slice by 2 in the f axis. In the fetch/delivery process of the first tensor (A01), E/2 of Slice0 and E/2 of Slice1 are delivered to both Slice1 and Slice0, respectively, through the fetch network, and each slice can independently and in parallel perform operations of F/2 on the f axis. That is, the fetch network may be configured to multicast to Slice0 and Slice1. The Contraction Engine (CE) of Slice0 and Slice1 uses data from both Slice0 and Slice1, and performs dot products using the corresponding data of the second tensor (A02) in the order of delivered data. Since the vector engine (177) does not need to reduce data from multiple slices, each slice's commit unit (180) performs the commit.

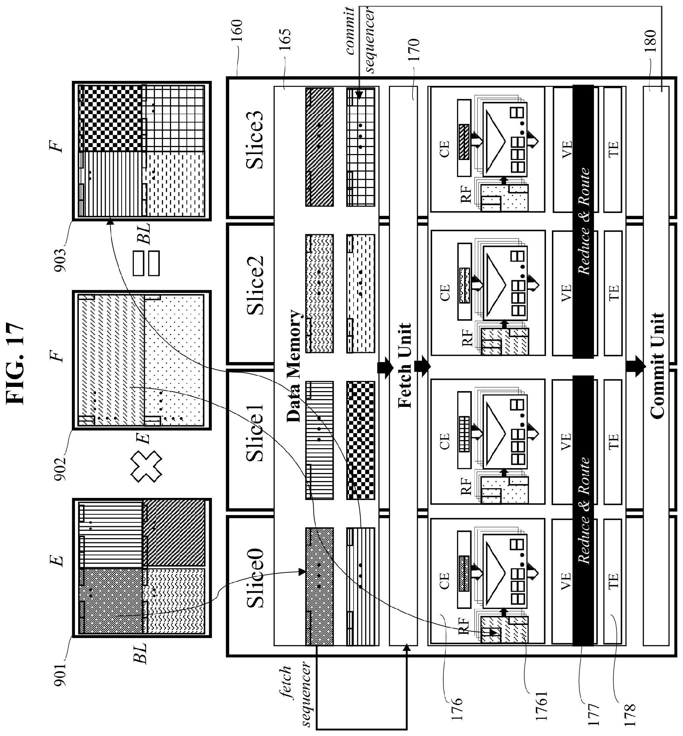

Referring to FIG. 17, matrix multiplication between two two-dimensional tensors (901, 902) is performed. The first tensor (901) is divided into 2 equal parts in both horizontal and vertical directions. The second tensor (902) may be stored in the register file of the contraction engine. A dot product is performed on the e axis for matrix multiplication. When divided/stored as in FIG. 17, Slice0 sequentially delivers E/2, and Slice1 sequentially delivers the remaining E/2 to perform a dot product, and (after subsequent necessary processing steps) the third tensor (903) can be output. Specifically, the result output from the contraction engine (CE) is reduced (summed) across two slices, and through the reduce & route function of the vector engine (VE), the results can be added from multiple slices and delivered to the target slice. The commit unit (180) can sequentially store the output tensor in the data memory (165). In FIG. 17, each data partition of the first tensor (901) is used multiple times (reuse) with respect to the second tensor (902). The contraction engine (CE) can feed the received input tensor to the DPE multiple times according to the control register configuration. Depending on the fed data, the contraction engine sequentially delivers data partitions of the corresponding second tensor (902) to the DPE to perform dot products, and can store intermediate results using multiple accumulators. Accordingly, input reuse included in tensor operations can be exploited. In relation to ble,ef → blf contraction, in the example of FIG. 17, contraction is performed as e^{E/2}[2] | e¹[E/2] across 2 slices, and parallel contraction is performed along the b^{B/2}[2] axis.

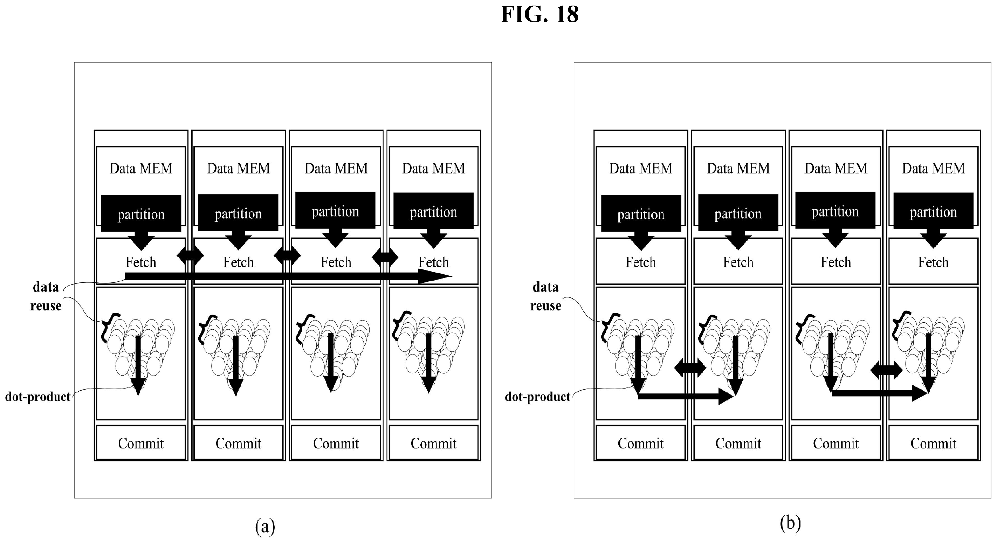

FIG. 18 illustrates examples of data reuse and dot products in the TCP (1).

As described above, in Approach I, data supplied to memory is delivered downward, and dot product is performed while the dot product operation result is delivered to the right.

In the proposed TCP (1), depending on settings of control registers of the compute pipeline including the fetch network, the following operations may be performed.
- Data fetched from each data memory may be multicast to all slices. Also, within each contraction engine, multiple dot product engines may be configured to perform dot product operations.
- Data fetched from each data memory is unicast to only its own contraction engine, and the contraction engine can reduce results after performing dot products.

As such, according to the configuration of the control register, operation units can be utilized to the maximum extent suitable for various tensor shapes, and by continuously fetching/operating/committing data along the time axis, the pipeline can be fully utilized through a data path configured/reconfigured based on the tensor operation.

As described above, the TCP proposed in this specification is a structure that can process tensor operations as primitives. Unlike Approach I accelerators that process unit matrix operations of a fixed size as instructions, TCP can specify the entire tensor operation of a variable size through control registers and accelerate it at once.

Tensor operations have very high regularity and have high levels of parallelism and data locality. TCP allows slices to be reconfigured to suit the tensor shape of each computation target in order to maximize the parallelism of the entire tensor operation, and ensures that they are always processed sequentially in a software-defined order. This allows the entire data locality included in the tensor operation to be exploited by fully utilizing a limited-size memory buffer.

When unit matrix operations of a fixed size are processed as instructions as in Approach I, the degree of data reuse is limited by the matrix operation size, but TCP can improve energy efficiency by enabling more data reuse. In addition, since TCP processes instructions in units of the entire tensor operation, the cost of processing instructions can be reduced and the size of programs can also be reduced compared to Approach I, which processes instructions for each unit matrix operation.

In this way, TCP can fully exploit parallelism and data locality in tensor contraction, thereby improving the efficiency and performance of tensor data processing used in AI and the like. TCP can be composed of large-scale PEs, which has the advantage of simplifying related software development. In addition, by performing the entire tensor contraction through a single control register configuration, control overhead can be minimized.

To efficiently process operations of various tensor shapes, multiple PEs may be configured as one computation unit or as a set of small computation units that can run independently. In addition, a fetch network may be configured/reconfigured like a circuit switch, through which a structure enabling data reuse between/within computation units can be provided.

Supporting dynamic shapes and control flow is important for optimization of AI accelerators, e.g., in LLM inference, and the proposed TCP (1) can support dynamic shapes and control flow by setting/resetting control registers, enabling more efficient program generation according to dynamically changing computational, memory, and power consumption requirements.

As described above, an apparatus for performing data processing (e.g., TCP) may include: a plurality of PEs (10) configured to perform tensor-based processing; and a semiconductor substrate on which the plurality of PEs (10) are mounted.

Each PE (10) may include: a plurality of slice circuits (160) each having a compute pipeline; and a control circuit (130) configured to control the plurality of slice circuits (160).

Each compute pipeline on each slice circuit (160) may include: i) a fetch unit (170) configured to fetch at least a part of tensor data; ii) an operation unit (175) configured to perform an operation on at least a part of the fetched tensor data; and iii) a commit unit (180) configured to deliver an operation result output from the operation unit to a destination.

The control circuit (130) may control mapping between partitions of the tensor data and a plurality of compute pipelines on the plurality of slice circuits (160).

For example, the plurality of slice circuits (160) may be configured/reconfigured based on a shape of the tensor data and an instruction given for the tensor data.

For example, each of the plurality of slice circuits (160) may be assigned a control register that stores configuration/reconfiguration information of each slice circuit.

For example, the control circuit (130) may perform configuration/reconfiguration of each slice circuit (160) and read/write of an associated control register.

For example, each PE (10) may further include a scratch pad memory (SPM) (140). A set of data of a plurality of control registers assigned to the plurality of slice circuits (160) may be configured by loading values stored in the scratch pad memory (140).

For example, partitioning of the tensor data may be performed based on at least one of the shape of the tensor data and an instruction given for the tensor data.

For example, a data memory (165) having a bandwidth related to the compute pipeline may be assigned for each slice circuit (160).

For example, the operation unit (175) may include at least one of: a contraction engine (176) configured to perform tensor contraction on at least a part of the fetched tensor data; a vector engine configured to perform an operation on a vector that is a one-dimensional tensor; and a transpose engine configured to perform data transposition.

For example, the contraction engine (176) may perform the tensor contraction by reducing a rank.

For example, the control circuit (130) may set a configurable fetch network through connections between different fetch units (170) on different slice circuits (160).

For example, data fetched by the fetch network may be sequentially multicast to operation units (175) of different slice circuits (160).

For example, the fetch network may perform the multicast by reusing the fetched data.

For example, the fetch unit may include a main fetch unit and a sub fetch unit, and the commit unit may include a main commit unit and a sub commit unit.

For example, a main data path may be configured based on the main fetch unit and the main commit unit, and a sub data path may be configured based on the sub fetch unit and the sub commit unit, and an operation on the main data path and an operation on the sub data path may be performed simultaneously within one slice circuit.

For example, the control circuit (130) may configure/reconfigure a first slice circuit and a second slice circuit, for delivering a first operation result of a first operation unit of the first slice circuit to the second slice circuit.

For example, each PE (10) may further include a core processor (110), and the control circuit (130) may operate as a co-processor for the core processor (110).

For example, the control circuit (130) may include a command processor configured to execute instructions obtained from the core processor (110). The instructions may include at least one of: an instruction for loading a control register address assigned to each slice circuit; and an instruction for enabling each slice circuit.

For example, the apparatus may further include: a memory controller (30) configured to control a data flow between the plurality of PEs (10) and a memory device; and an on-chip network formed on the semiconductor substrate for the plurality of PEs (10) and the memory controller (30).

For example, the tensor data may be related to neural network processing for artificial intelligence.

For example, the apparatus may be a tensor contraction processor (TCP, 1) for accelerating neural network processing for artificial intelligence.

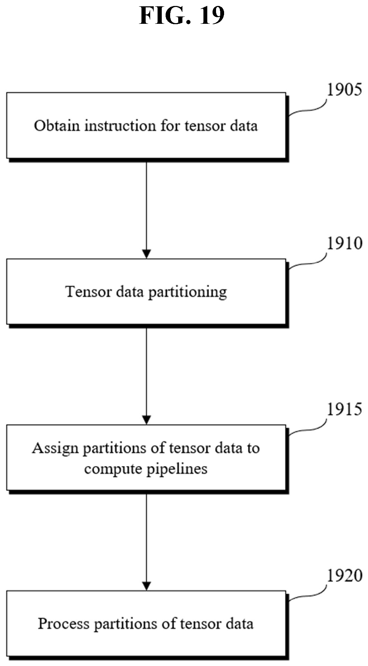

FIG. 19 illustrates a flow of a method performed in an apparatus for data processing according to an embodiment.

Referring to FIG. 19, the apparatus for data processing may obtain an instruction(s) for tensor data (1905).

The apparatus for data processing may perform partitioning on the tensor data based on at least one of a shape of the tensor data and the instruction (1910).

The apparatus for data processing may assign partitions of the tensor data to a plurality of compute pipelines (1915).

The apparatus for data processing may process each of the partitions of the tensor data through each of the plurality of compute pipelines (1920). Each compute pipeline may include: i) a process of fetching each partition of the tensor data, ii) a process of performing an operation on the fetched partition, and iii) a commit process of delivering a result of performing the operation to a destination.

The embodiments of the present invention described above may be implemented through various means. For example, embodiments of the present invention may be implemented in hardware, firmware, software, or combinations thereof.

In the case of hardware implementation, the methods according to embodiments of the present invention may be implemented in one or more ASICs (Application Specific Integrated Circuits), DSPs (Digital Signal Processors), DSPDs (Digital Signal Processing Devices), PLDs (Programmable Logic Devices), FPGAs (Field Programmable Gate Arrays), processors, controllers, micro-controllers, micro-processors, and the like.

In the case of implementation by firmware or software, the method according to embodiments of the present invention may be implemented in the form of a module, procedure, or function that performs the functions or operations described above. Software codes can be stored in a memory unit and driven by a processor. The memory unit may be located inside or outside the processor and may exchange data with the processor by various means already known.

The detailed description of the preferred embodiments of the present invention disclosed as described above has been provided to enable those skilled in the art to implement and practice the present invention. While the invention has been described with reference to preferred embodiments, those skilled in the relevant art will understand that various modifications and changes can be made to the invention without departing from the scope of the invention. For example, those skilled in the art may use each configuration described in the above-described embodiments in combination with each other. Therefore, the present invention is not intended to be limited to the embodiments shown herein, but is to be accorded the widest scope consistent with the principles and novel features disclosed herein.

The present invention may be embodied in other specific forms without departing from the spirit and essential characteristics of the invention. Accordingly, the above detailed description should not be interpreted as restrictive in all aspects and should be considered as illustrative. The scope of the present invention should be determined by reasonable interpretation of the appended claims, and all modifications within the equivalent scope of the present invention are included in the scope of the present invention. In addition, claims that do not have explicit citation relationships in the claims may be combined to form embodiments or may be included as new claims by amendment after filing.

## Claims

1. An apparatus for performing data processing, the apparatus comprising:
a plurality of processing elements (PEs) configured to perform tensor-based processing; and
a semiconductor substrate on which the plurality of PEs are mounted,
wherein each PE comprises:
a plurality of slice circuits each having a compute pipeline; and
a control circuit configured to control the plurality of slice circuits,
wherein each compute pipeline on each slice circuit comprises: i) a fetch unit configured to fetch at least a part of tensor data, ii) an operation unit configured to perform an operation on at least a part of the fetched tensor data, and iii) a commit unit configured to deliver an operation result output from the operation unit to a destination, and
wherein the control circuit is configured to control mapping between partitions of the tensor data and a plurality of compute pipelines on the plurality of slice circuits.

2. The apparatus of claim 1, wherein the plurality of slice circuits are configured/reconfigured based on a shape of the tensor data and an instruction given for the tensor data.

3. The apparatus of claim 2, wherein each of the plurality of slice circuits is assigned a control register that stores configuration/reconfiguration information of each slice circuit.

4. The apparatus of claim 3, wherein the control circuit is configured to perform configuration/reconfiguration of each slice circuit and read/write of an associated control register.

5. The apparatus of claim 3,
wherein each PE further comprises a scratch pad memory (SPM), and
wherein data of a plurality of control registers assigned to the plurality of slice circuits are configured by loading values stored in the scratch pad memory.

6. The apparatus of claim 1, wherein partitioning of the tensor data is performed based on at least one of a shape of the tensor data and an instruction given for the tensor data.

7. The apparatus of claim 1, wherein a data memory having a bandwidth related to a compute pipeline is assigned for each slice circuit.

8. The apparatus of claim 1, wherein the operation unit includes at least one of: a contraction engine configured to perform tensor contraction on at least a part of the fetched tensor data; a vector engine configured to perform an operation on a vector that is a one-dimensional tensor; and a transpose engine configured to perform data transposition.

9. The apparatus of claim 8, wherein the contraction engine performs the tensor contraction by reducing a rank.

10. The apparatus of claim 1, wherein the control circuit configures a configurable fetch network through a connection between different fetch units on different slice circuits.

11. The apparatus of claim 10, wherein data fetched by the fetch network is multicast to different operation units of the different slice circuits.

12. The apparatus of claim 11, wherein the fetch network performs the multicast by reusing the fetched data.

13. The apparatus of claim 1,
wherein the fetch unit includes a main fetch unit and a sub fetch unit, and
wherein the commit unit includes a main commit unit and a sub commit unit.

14. The apparatus of claim 13,
wherein a main data path is configured based on the main fetch unit and the main commit unit,
wherein a sub data path is configured based on the sub fetch unit and the sub commit unit, and
wherein an operation on the main data path and an operation on the sub data path are performed simultaneously within one slice circuit.

15. The apparatus of claim 1, wherein the control circuit configures/reconfigures a first slice circuit and a second slice circuit, for delivering a first operation result of a first operation unit of the first slice circuit to the second slice circuit.

16. The apparatus of claim 1,
wherein each PE further comprises a core processor, and
wherein the control circuit operates as a co-processor for the core processor.

17. The apparatus of claim 16,
wherein the control circuit comprises a command processor configured to execute instructions obtained from the core processor, and
wherein the instructions include at least one of: an instruction for loading a control register address assigned to each slice circuit; and an instruction for enabling each slice circuit.

18. The apparatus of claim 1, further comprising:
a memory controller configured to control a data flow between the plurality of PEs and a memory device; and
an on-chip network formed on the semiconductor substrate for the plurality of PEs and the memory controller.

19. The apparatus of claim 1, wherein the tensor data is related to neural network processing for artificial intelligence.

20. The apparatus of claim 19, wherein the apparatus is a tensor contraction processor for accelerating the neural network processing for artificial intelligence.

21. A method for performing data processing, the method comprising:
obtaining an instruction for tensor data;
performing partitioning on the tensor data based on at least one of a shape of the tensor data and the instruction;
assigning partitions of the tensor data to a plurality of compute pipelines; and
processing each of the partitions of the tensor data through each of the plurality of compute pipelines,
wherein each compute pipeline comprises i) a process of fetching each partition of the tensor data, ii) a process of performing an operation on the fetched partition, and iii) a commit process of delivering a result of the operation to a destination.

22. A storage medium readable by at least one processor and storing program codes that, when executed by the at least one processor, cause the at least one processor to perform operations, the operations comprising:
obtaining an instruction for tensor data;
performing partitioning on the tensor data based on at least one of a shape of the tensor data and the instruction;
assigning partitions of the tensor data to a plurality of compute pipelines; and
processing each of the partitions of the tensor data through each of the plurality of compute pipelines,
wherein each compute pipeline comprises i) a process of fetching each partition of the tensor data, ii) a process of performing an operation on the fetched partition, and iii) a commit process of delivering a result of the operation to a destination.

23. The storage medium of claim 22,
wherein the plurality of compute pipelines are formed on a plurality of slice circuits, and
wherein the plurality of slice circuits are configured/reconfigured based on a shape of the tensor data and an instruction given for the tensor data.

24. The storage medium of claim 23, wherein each of the plurality of slice circuits is assigned a control register that stores configuration/reconfiguration information of each slice circuit.

25. The storage medium of claim 24, wherein the operations performed by the at least one processor further comprise:
performing configuration/reconfiguration of each slice circuit and read/write of an associated control register.

26. The storage medium of claim 22, wherein the operations performed by the at least one processor further comprise:
determining partitioning of the tensor data based on at least one of a shape of the tensor data and an instruction given for the tensor data.

27. The storage medium of claim 22, wherein the operations performed by the at least one processor further comprise:
assigning, for each compute pipeline, a data memory having a related bandwidth.

28. The storage medium of claim 22, wherein the process of performing the operation includes at least one of: performing tensor contraction on at least a part of the fetched tensor data; performing an operation on a vector that is a one-dimensional tensor; and performing data transposition.

29. The storage medium of claim 28, wherein the at least one processor performs the tensor contraction by reducing a rank.

30. The storage medium of claim 22, wherein the tensor data is related to neural network processing for artificial intelligence.

31. The storage medium of claim 22, wherein the at least one processor is a tensor contraction processor for accelerating the neural network processing for artificial intelligence.
